# EUROPEAN PATENT APPLICATION

(11) **EP 4 503 385 A1**
(43) Date of publication of application: **05.02.2025**
(21) Application number: 22933478.4
(22) Date of filing: 25.03.2022
(51) Int. Cl.: H02J 50/20, H02J 50/40, H02J 50/80, G05B 19/042

(54) **WIRELESS SYSTEM**

(71) Applicant: SMC Corporation, Tokyo 101-0021 (JP); Aeterlink Corp., Tokyo 130-0013 (JP)
(72) Inventor: OZAKI, Norimasa, 300-2493 Ibaraki (JP); TANABE, Yuji, 130-0013 Tokyo (JP); KODATE, Naoto, 130-0013 Tokyo (JP)
(74) Representative: Keil & Schaafhausen Patentanwälte PartGmbB
(86) International application number: PCT/JP2022/014296
(87) International publication number: WO 2023/181338

(57) **Abstract**

A wireless system (10) comprises: base wireless devices (14); remote wireless devices (16) that communicate wirelessly with the base wireless devices; sensor devices (18) that wirelessly transmit signals to the remote wireless devices; and wireless power-supplying devices (20) that supply power wirelessly to at least the sensor devices.

## Description

### TECHNICAL FIELD

The present invention relates to a wireless system.

### BACKGROUND ART

JP 5497730 B2 discloses an FA system in which a PC and a controller are connected via a field network. In JP 5497730 B2, transmission and reception of wireless messages are performed.

### SUMMARY OF THE INVENTION

In recent years, a more satisfactory system has been eagerly awaited.

The present invention has the object of solving the aforementioned problems.

A wireless system according to one aspect of the present invention includes a base wireless device, a remote wireless device configured to perform wireless communication with the base wireless device, a sensor device configured to transmit a signal to the remote wireless device wirelessly, a wireless power supply device configured to perform wireless power supply to at least the sensor device.

A wireless system according to another aspect of the present invention includes a computer, a first base wireless device connected to the computer by a fieldbus, a first remote wireless device configured to perform wireless communication with the first base wireless device, a first sensor device configured to transmit a signal to the first remote wireless device, a second base wireless device connected to the computer by the fieldbus, a second sensor device configured to transmit a signal to the second base wireless device wirelessly, a wireless power supply device configured to perform wireless power supply to at least the first sensor device, and another wireless power supply device configured to perform wireless power supply to the second sensor device.

According to the present invention, it is possible to provide a satisfactory wireless system.

### BRIEF DESCRIPTION OF DRAWINGS

[FIG. 1] FIG. 1 is a diagram showing the configuration of a wireless system according to a first embodiment;
[FIG. 2] FIG. 2 is a block diagram showing the wireless system according to the first embodiment;
[FIG. 3] FIG. 3 is a diagram showing an example of production equipment;
[FIG. 4] FIG. 4 is a diagram showing a configuration of a wireless system according to a second embodiment;
[FIG. 5] FIG. 5 is a block diagram showing the wireless system according to the second embodiment;
[FIG. 6] FIG. 6 is a diagram showing a configuration of a wireless system according to a third embodiment;
[FIG. 7] FIG. 7 is a diagram showing a part of a configuration of the wireless system according to the third embodiment;
[FIG. 8] FIG. 8 is a diagram showing a part of a configuration of a wireless system according to a fourth embodiment; and
[FIG. 9] FIG. 9 is a diagram showing a configuration of a wireless system according to a fifth embodiment.

### DETAILED DESCRIPTION OF THE INVENTION

### [First Embodiment]

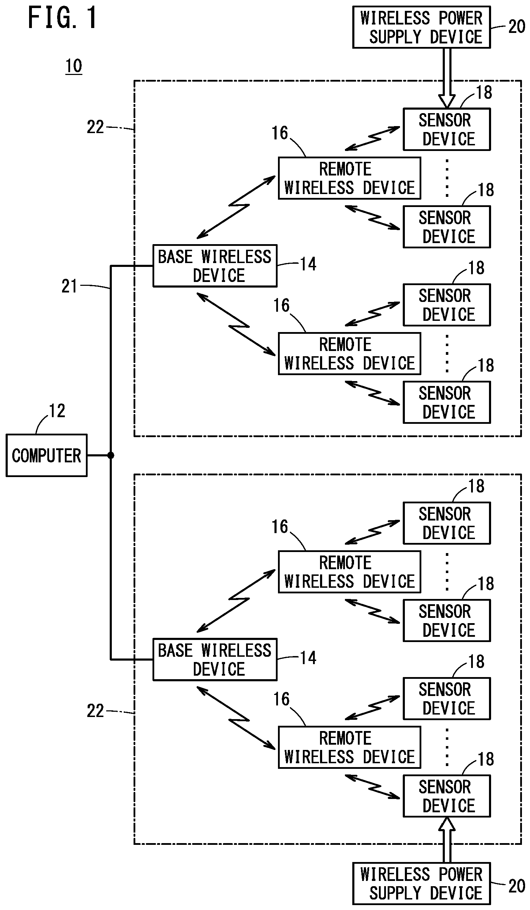

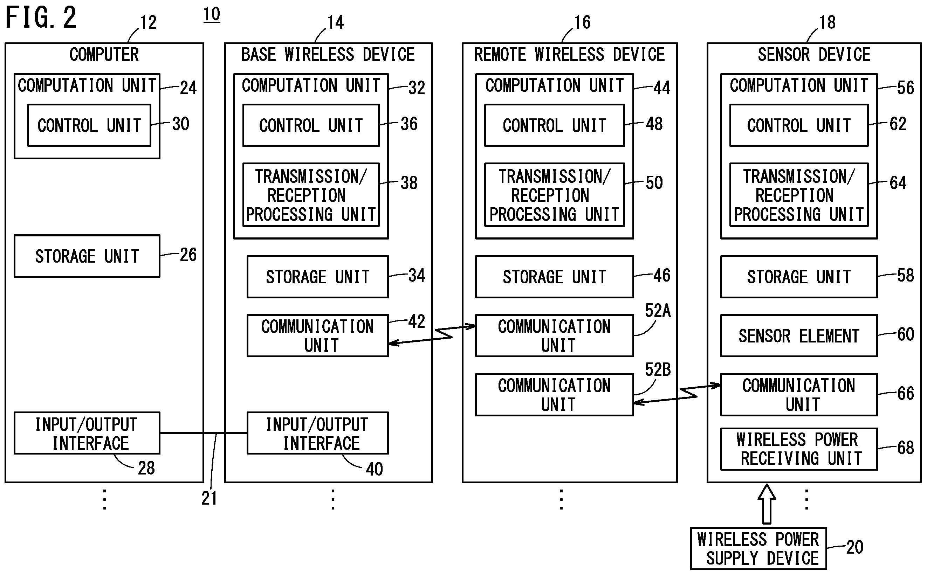

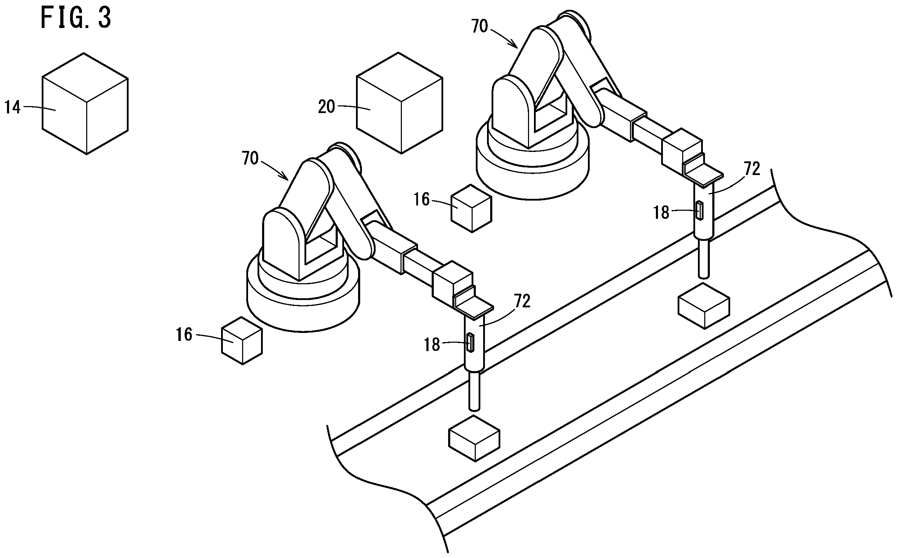

A wireless system according to a first embodiment will be described with reference to FIGS. 1 to 3. FIG. 1 is a diagram showing a configuration of a wireless system according to the present embodiment. FIG. 2 is a block diagram showing a wireless system according to the present embodiment. FIG. 3 is a diagram showing an example of production equipment.

As shown in FIG. 1, a wireless system 10 according to the present embodiment may include a computer 12, a base wireless device 14, a remote wireless device 16, a sensor device 18, and a wireless power supply device 20. The wireless system 10 may include a plurality of the base wireless devices 14. The single computer 12 and the plurality of base wireless devices 14 may be connected via a fieldbus 21. Two of the plurality of base wireless devices 14 are shown in FIG. 1.

Pairing may be performed in advance between the base wireless device 14 and the remote wireless device 16. A synchronous connection may be carried out between the paired base wireless device 14 and remote wireless device 16. A plurality of the remote wireless devices 16 may be synchronously connected to one of the base wireless devices 14. The base wireless device 14 may transmit signals to and receive signals from the plurality of remote wireless devices 16 wirelessly.

Pairing may be performed in advance between the remote wireless device 16 and the sensor device 18. A synchronous connection may be carried out between the paired remote wireless device 16 and the sensor device 18. A plurality of sensor devices 18 may be synchronously connected to one of the remote wireless devices 16. The remote wireless device 16 may transmit signals to and receive signals from the plurality of sensor devices 18 wirelessly.

A network 22 may be configured by synchronously connecting the base wireless device 14 and the remote wireless devices 16, and by synchronously connecting the remote wireless devices 16 and the sensor devices 18. A plurality of networks 22 may be configured in the wireless system 10. Two of the plurality of networks 22 are shown in FIG. 1.

The computer 12 may perform a supervisory control of production equipment (industrial equipment) 70 (see FIG. 3). As the computer 12, for example, a programmable logic controller (PLC) may be used, but the computer 12 is not limited thereto. As illustrated in FIG. 2, the computer 12 may include, for example, a computation unit 24 and a storage unit 26.

The computation unit 24 may include, for example, a processor such as a central processing unit (CPU). That is, the computation unit 24 may include a processing circuitry. The computation unit 24 may include a control unit 30. Although components other than the control unit 30 may be included in the computation unit 24, the components other than the control unit 30 are omitted here for the sake of simplicity of description. The control unit 30 administers the control of the computer 12 as a whole. The control unit 30 may perform a supervisory control of the production equipment 70. The control unit 30 may be realized by programs that are stored in the storage unit 26 being executed by the computation unit 24. Moreover, it should be noted that at least a portion of the control unit 30 may be implemented by an integrated circuit such as an ASIC (Application Specific Integrated Circuit) or an FPGA (Field-Programmable Gate Array). At least a part of the control unit 30 may be an electronic circuit including a discrete device.

The storage unit 26 may include a volatile memory (not illustrated) and a non-volatile memory (not illustrated). As the volatile memory, there may be cited, for example, a RAM (Random Access Memory). The volatile memory is used as a working memory for the processor, and temporarily stores data and the like necessary for performing processes or calculations. As the non-volatile memory, there may be cited, for example, a ROM (Read Only Memory), a flash memory, or the like. The non-volatile memory is used as a memory for storage, and there are stored, for example, programs, tables, maps, and the like therein. At least a portion of the storage unit 26 may be provided in the processor, the integrated circuit, or the like, which were described above. The storage unit 26 may further include a hard disk drive (HDD), a solid state drive (SSD), and the like.

An input/output interface 28 for realizing a fieldbus connection may be provided in the computer 12. Via the fieldbus 21, the computer 12 is capable of carrying out communications with the base wireless devices 14.

The base wireless device 14 may include, for example, a computation unit 32 and a storage unit 34.

The computation unit 32 may include, for example, a processor such as a CPU. That is, the computation unit 32 may include a processing circuit. The computation unit 32 may include a control unit 36 and a transmission/reception processing unit 38. Although components other than these components may be included in the computation unit 32, the components other than these components are omitted here for simplification of description. The control unit 36 and the transmission/reception processing unit 38 can be realized by the computation unit 32 executing a program stored in the storage unit 34. The control unit 36 controls the entire base wireless device 14. At least a part of the control unit 36 and the transmission/reception processing unit 38 may be implemented by an integrated circuit such as an ASIC or an FPGA. At least a part of the control unit 36 and the transmission/reception processing unit 38 may be an electronic circuit including a discrete device.

The storage unit 34 may include a volatile memory (not illustrated) and a nonvolatile memory (not illustrated). As the volatile memory, there may be cited, for example, a RAM. The volatile memory is used as a working memory for the processor, and temporarily stores data and the like necessary for performing processes or calculations. As the non-volatile memory, there may be cited, for example, a ROM, a flash memory, or the like. The non-volatile memory is used as a memory for storage, and there are stored, for example, programs, tables, maps, and the like therein. At least a portion of the storage unit 34 may be provided in the processor, the integrated circuit, or the like, which were described above.

An input/output interface 40 for realizing a fieldbus connection may be provided in the base wireless device 14. In the manner discussed previously, the base wireless devices 14 may be connected to the computer 12 by the fieldbus 21.

The base wireless device 14 may further include a communication unit 42 for performing wireless communication. Using the communication unit 42, the base wireless device 14 may carry out wireless communications with the remote wireless device 16.

The remote wireless device 16 may include, for example, a computation unit 44 and a storage unit 46.

The computation unit 44 may include, for example, a processor such as a CPU. That is, the computation unit 44 may include a processing circuit. The computation unit 44 may include a control unit 48 and a transmission/reception processing unit 50. Although components other than these components may be included in the computation unit 44, the components other than these components are omitted here for the sake of simplicity. The control unit 48 and the transmission/reception processing unit 50 can be realized by the computation unit 44 executing a program stored in the storage unit 46. The control unit 48 controls the entire remote wireless device 16. At least a part of the control unit 48 and the transmission/reception processing unit 50 may be implemented by an integrated circuit such as an ASIC or an FPGA. At least a part of the control unit 48 and the transmission/reception processing unit 50 may be an electronic circuit including a discrete device.

The storage unit 46 may include a volatile memory (not illustrated) and a non-volatile memory (not illustrated). As the volatile memory, there may be cited, for example, a RAM. The volatile memory is used as a working memory for the processor, and temporarily stores data and the like necessary for performing processes or calculations. As the non-volatile memory, there may be cited, for example, a ROM, a flash memory, or the like. The non-volatile memory is used as a memory for storage, and there are stored, for example, programs, tables, maps, and the like therein. At least a portion of the storage unit 46 may be provided in the processor, the integrated circuit, or the like, which were described above.

The remote wireless device 16 may further include communication units 52A and 52B for performing wireless communication. Using the communication unit 52A, the remote wireless device 16 may carry out wireless communication with the base wireless device 14. Further, using the communication unit 52B, the remote wireless device 16 may carry out wireless communication with the sensor device 18. The wireless communication performed between the base wireless device 14 and the remote wireless device 16 and the wireless communication performed between the remote wireless device 16 and the sensor device 18 need not be synchronized. The protocol of wireless communication performed between the base wireless device 14 and the remote wireless device 16 may be the same as or different from the protocol of the wireless communication performed between the remote wireless device 16 and the sensor device 18. The protocol of the wireless communication performed between the base wireless device 14 and the remote wireless device 16 and the protocol of the wireless communication performed between the remote wireless device 16 and the sensor device 18 are made different from each other, which may contribute to a reduction in the amount of data in the wireless communication. The frequency band used in the wireless communication performed between the base wireless device 14 and the remote wireless device 16 may be the same as or different from the frequency band used in the wireless communication performed between the remote wireless device 16 and the sensor device 18. The frequency band used in the wireless communication between the base wireless device 14 and the remote wireless device 16 and the frequency band used in the wireless communication between the remote wireless device 16 and the sensor device 18 are made different from each other, which may contribute to the reduction of the amount of data in the wireless communication.

The sensor device 18 may include, for example, a computation unit 56, a storage unit 58, and a sensor element 60.

The computation unit 56 may include, for example, a processor such as a CPU. That is, the computation unit 56 may include a processing circuit. The computation unit 56 may include a control unit 62 and a transmission/reception processing unit 64. Although components other than these components may be included in the computation unit 56, the components other than these components are omitted here for the sake of simplicity. The control unit 62 and the transmission/reception processing unit 64 can be realized by the computation unit 56 executing a program stored in the storage unit 58. The control unit 62 controls the entire sensor device 18. At least a part of the control unit 62 and the transmission/reception processing unit 64 may be implemented by an integrated circuit such as an ASIC or an FPGA. At least a part of the control unit 62 and the transmission/reception processing unit 64 may be an electronic circuit including a discrete device.

The storage unit 58 may include a volatile memory (not illustrated) and a non-volatile memory (not illustrated). As the volatile memory, there may be cited, for example, a RAM. The volatile memory is used as a working memory for the processor, and temporarily stores data and the like necessary for performing processes or calculations. As the non-volatile memory, there may be cited, for example, a ROM, a flash memory, or the like. The non-volatile memory is used as a memory for storage, and stores programs, tables, maps, and the like. At least a portion of the storage unit 58 may be provided in the processor, the integrated circuit, or the like, which were described above.

The sensor element 60 is, for example, a magnetic sensor, but is not limited thereto.

FIG. 3 is a diagram showing an example of the production equipment. The production equipment 70 may be provided with an actuator 72. The sensor device 18 may be provided for, e.g., the actuator 72, but is not limited thereto. The actuator 72 may be, for example, a cylinder device, but is not limited thereto. The sensor device 18 may output a signal corresponding to, for example, the stroke position of the actuator 72, but the present invention is not limited thereto. The actuator 72 may include one sensor device 18 or a plurality of sensor devices 18.

As shown in FIG. 2, the sensor device 18 may further include a communication unit 66 for performing wireless communication. The sensor device 18 may perform wireless communication with the remote wireless device 16 using the communication unit 66.

The sensor device 18 may further include a wireless power receiving unit 68. The wireless power receiving unit 68 may receive electrical power wirelessly supplied from the wireless power supply device 20. The wireless power receiving unit 68 receives the electric power supplied from the wireless power supply device 20 via an antenna (not shown). The wireless power receiving unit 68 may include a rectifier circuit (not shown). The rectifier circuit or the like rectifies the AC power received from the wireless power supply device 20 to generate DC power. The wireless power receiving unit 68 may supply the DC power to each component of the sensor device 18.

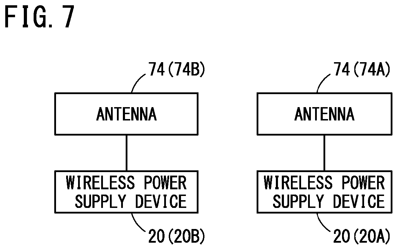

The wireless power supply device 20 may perform wireless power supply (wireless supply of electric power). The wireless power supply device 20 may perform wireless power supply to a plurality of sensor devices 18, but the present invention is not limited thereto. The wireless power supply device 20 can perform wireless power supply via the antenna 74 (see FIG. 7). The wireless power supply device 20 can perform wireless power supply using electromagnetic waves. As the electromagnetic waves, for example, microwaves may be used. The frequency band of the microwaves used for the wireless power supply is, for example, a 920 MHz band, but is not limited thereto. For example, microwaves in a frequency band of 2.4 GHz may be used for the wireless power supply. Further, for example, microwaves in a frequency band of 5.7 GHz may be used for the wireless power supply.

As described above, wireless communication may be performed between the sensor devices 18 and the remote wireless devices 16. The frequency band used in the wireless communication between the sensor devices 18 and the remote wireless devices 16 is included in, for example, frequency bands for industrial, scientific, and medical applications (ISM bands: Industry-Science-Medical Bands).

As described above, wireless communication may be performed between the remote wireless devices 16 and the base wireless devices 14. The frequency band used in the wireless communication between the remote wireless devices 16 and the base wireless devices 14 is included in, for example, frequency bands for industrial, scientific, and medical applications.

Electric power may be supplied by wire to the computer 12, the base wireless devices 14, and the remote wireless devices 16.

In this way, the wireless system 10 according to the present embodiment is configured.

As described above, according to the present embodiment, the supply of electric power to the sensor devices 18 can be performed by the wireless power supply devices 20. Further, the sensor devices 18 and the remote wireless devices 16 can also perform wireless communication. Therefore, according to the present embodiment, wiring for supplying electric power to the sensor devices 18 is not required. Therefore, according to the present embodiment, disconnection of such wiring cannot occur. Since such wiring is not required, the present embodiment can enhance the freedom of arrangement of the sensor devices 18 and the like. As described above, according to the present embodiment, it is possible to provide the satisfactory wireless system 10.

### [Second Embodiment]

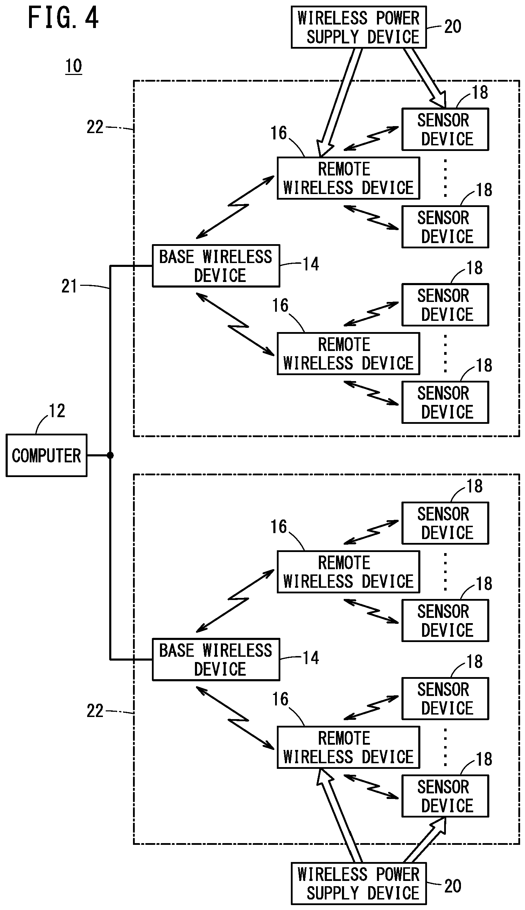

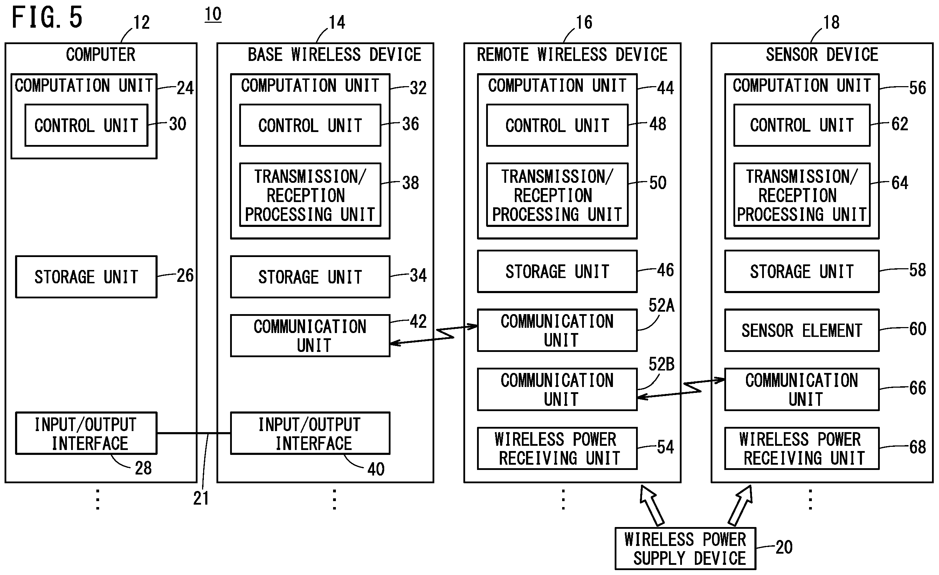

A wireless system according to a second embodiment will be described with reference to FIG. 4. FIG. 4 is a diagram showing the configuration of the wireless system according to the present embodiment. FIG. 5 is a block diagram showing the wireless system according to the present embodiment. The same components as those of the wireless system according to the first embodiment shown in FIGS. 1 to 3 are denoted by the same reference numerals, and description of such features is either omitted or simplified.

In the present embodiment, not only may the sensor devices 18 be wirelessly powered, but the remote wireless devices 16 can also be wirelessly powered.

As shown in FIG. 5, the remote wireless device 16 may include a wireless power receiving unit 54. The wireless power receiving unit 54 may receive electrical power wirelessly supplied from the wireless power supply device 20. The wireless power receiving unit 54 may receive electrical power wirelessly supplied from the wireless power supply device 20. The wireless power receiving unit 54 receives the electric power supplied from the wireless power supply device 20 via an antenna (not shown). The wireless power receiving unit 54 may include a rectifier circuit (not shown). The rectifier circuit or the like rectifies the AC power received from the wireless power supply device 20 to generate DC power. The wireless power receiving unit 54 may supply the DC power to each component of the remote wireless device 16.

In the example shown in FIG. 5, the wireless power supply device 20 may perform wireless power supply to any of the remote wireless device 16 and the sensor device 18.

Electric power may be supplied by wire to the computer 12 and the base wireless device 14.

In this way, the wireless system 10 according to the present embodiment is configured.

As described above, according to the present embodiment, wireless power supply may be performed not only to the sensor devices 18, but also to the remote wireless devices 16. According to the present embodiment, since the wireless power supply may be performed also to the remote wireless devices 16, wiring for supplying electric power or the like to the remote wireless devices 16 is not required. Therefore, according to the present embodiment, the disconnection of wiring for supplying electric power or the like to the remote wireless devices 16 cannot occur. In addition, the present embodiment can enhance the freedom of arrangement of the remote wireless devices 16. As described above, according to the present embodiment, it is possible to provide the wireless system 10 that is more satisfactory.

### [Third Embodiment]

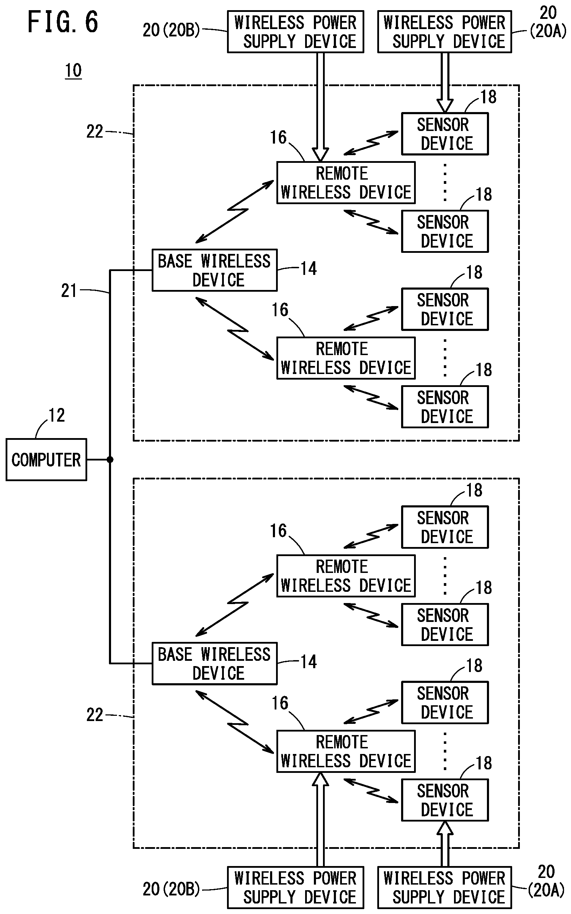

A wireless system according to a third embodiment will be described with reference to FIGS. 6 and 7. FIG. 6 is a diagram showing the configuration of the wireless system according to the present embodiment. The same components as those of the wireless system according to the first or second embodiment shown in FIGS. 1 to 5 are denoted by the same reference numerals, and description of such features is either omitted or simplified.

According to the present embodiment, the wireless power supply to the remote wireless devices 16 may be performed by wireless power supply devices 20B, which are separate from wireless power supply devices 20A that perform the wireless power supply to the sensor devices 18.

As shown in FIG. 6, the wireless system 10 may include the wireless power supply devices 20A and the wireless power supply devices 20B. Each of the wireless power supply devices 20A may perform wireless power supply to the sensor devices 18. Each of the wireless power supply devices 20B may perform wireless power supply to the remote wireless devices 16. When describing the individual wireless power supply devices without distinction, the reference numeral 20 is used, and when describing the individual wireless power supply devices separately, the reference numerals 20A and 20B are used.

FIG. 7 is a diagram showing a part of the wireless system according to the present embodiment. An example of the connection of antennas is shown in FIG. 7.

As shown in FIG. 7, the wireless power supply device 20A may be provided with an antenna 74A. The wireless power supply device 20B may be provided with an antenna 74B. The antennas 74A and 74B are for performing wireless power supply. When the individual antennas are described without distinction, the reference numeral 74 is used, and when the individual antennas are described separately, the reference numerals 74A and 74B are used. As shown in FIG. 7, separate antennas 74A, 74B may be provided in the respective wireless power supply devices 20A and 20B.

In this way, the wireless power supply to the remote wireless devices 16 may be performed by the wireless power supply devices 20B, which are separate from the wireless power supply devices 20A that performs the wireless power supply to the sensor devices 18.

### [Fourth Embodiment]

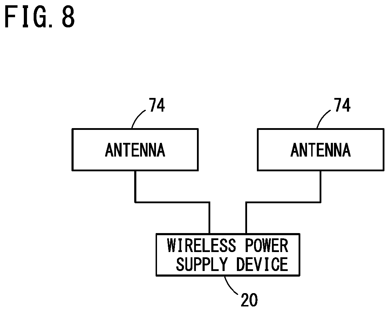

A wireless system according to a fourth embodiment will be described with reference to FIG. 8. FIG. 8 is a diagram showing a part of the wireless system according to the present embodiment. An example of the connection of an antenna is shown in FIG. 8. The same components as those of the wireless system according to the first to third embodiments shown in FIGS. 1 to 7 are denoted by the same reference numerals, and description of such features is either omitted or simplified.

As shown in FIG. 8, in the present embodiment, a plurality of antennas 74 are connected to the wireless power supply device 20. The wireless power supply device 20 can perform wireless power supply via the plurality of antennas 74. For example, one of the plurality of antennas 74 is used for wireless power supply to the sensor devices 18, and the other of the plurality of antennas 74 is used for wireless power supply to the remote wireless devices 16, but the present invention is not limited thereto. Three or more antennas 74 may be connected to the wireless power supply device 20.

In this way, the plurality of antennas 74 may be connected to the wireless power supply device 20.

### [Fifth Embodiment]

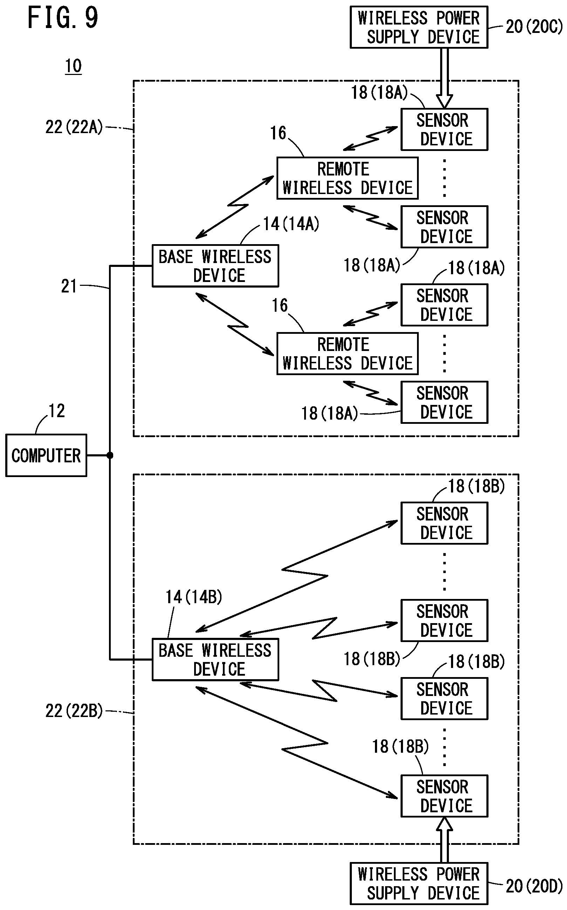

A wireless system according to a fifth embodiment will be described with reference to FIG. 9. FIG. 9 is a diagram showing the configuration of the wireless system according to the present embodiment. The same components as those of the wireless system according to the first to fourth embodiments shown in FIGS. 1 to 8 are denoted by the same reference numerals, and description of such features is either omitted or simplified.

In the present embodiment, wireless power supply can be performed between a base wireless device 14B and sensor devices 18B without using remote wireless devices 16.

As shown in FIG. 9, in a network 22A, wireless communication can be performed between a base wireless device 14A and remote wireless devices 16. In the network 22A, wireless communication can be performed between the remote wireless devices 16 and sensor devices 18A. When describing the individual base wireless devices without distinction, the reference numeral 14 is used, and when describing the individual base devices separately, the reference numerals 14A and 14B are used. When describing the individual sensor devices without distinction, the reference numeral 18 is used, and when describing the individual sensor devices separately, the reference numerals 18A and 18B are used.

In a network 22B, wireless power supply can be performed between the base wireless device 14B and the sensor devices 18B without using the remote wireless devices 16.

A wireless power supply device 20C may perform wireless power supply to the sensor devices 18 that constitute the network 22A. The wireless power supply device 20C may perform wireless power supply not only to the sensor devices 18A that constitutes the network 22A, but also to the remote wireless devices 16 that constitute the network 22A. In addition, wireless power supply may be performed to the remote wireless devices 16 that constitute the network 22A, by a wireless power supply device (not shown) that is separate from the wireless power supply device 20C.

A wireless power supply device 20D can perform wireless supply power to the sensor devices 18B that constitute the network 22B.

As described above, according to the present embodiment, in the network 22B, the wireless communication may be performed between the base wireless device 14B and the sensor devices 18B without using the remote wireless devices 16. According to the present embodiment, since the wireless communication can be performed between the base wireless device 14B and the sensor devices 18B without using the remote wireless devices 16, the remote wireless devices 16 are not required in the network 22B. Therefore, according to the present embodiment, it is possible to reduce the cost or the like of the wireless system 10.

The invention that can be grasped from the above-described embodiments will be described below.

The wireless system (10) includes the base wireless device (14), the remote wireless device (16) configured to perform wireless communication with the base wireless device, the sensor device (18) configured to transmit the signal to the remote wireless device wirelessly, the wireless power supply device (20) configured to perform wireless power supply to at least the sensor device. In accordance with such a configuration, wiring for supplying power to the sensor device is not required. Therefore, in accordance with such a configuration, disconnection of such wiring cannot occur. Since such wiring is not required, it is possible to improve the freedom of arrangement of the sensor device and the like. In accordance with such a configuration, it is possible to provide a satisfactory wireless system.

In the above wireless system, the wireless power supply to the remote wireless device may be performed by the wireless power supply device. In accordance with such a configuration, since the wireless power supply may be performed also to the remote wireless device, wiring for supplying electric power to the remote wireless device is not required. Therefore, in accordance with such a configuration, the disconnection of wiring for supplying electric power or the like to the remote wireless device cannot occur. Further, in accordance with such a configuration, In addition, the freedom of arrangement of the remote wireless device can be improved. In accordance with such a configuration, it is possible to provide the wireless system that is more satisfactory.

The above wireless system may further include the other wireless power supply device (20B) configured to perform wireless power supply to the remote wireless device.

In the above wireless system, the frequency of the electromagnetic wave used in the wireless power supply performed by the wireless power supply device may be the same as the frequency of the electromagnetic wave used in the wireless power supply performed by the other wireless power supply device.

In the above wireless system, the frequency of the electromagnetic wave used in the wireless power supply performed by the wireless power supply device may be different from the frequency of the electromagnetic wave used in the wireless power supply performed by the other wireless power supply device.

In the above wireless system, the wireless power supply device may perform the wireless power supply using the plurality of antennas (74).

In the wireless system, the plurality of the base wireless devices may be provided, the wireless system may further include the computer (12) connected to the plurality of base wireless devices by the fieldbus (21), at least one base wireless device (14B) among the plurality of base wireless devices may receive the signal transmitted from the other sensor device (18B) wirelessly without using the remote wireless device, and the wireless power supply to the other sensor device may be performed by the other wireless power supply device (20D). In accordance with such a configuration, the signal transmitted from the other sensor device can be received by the base wireless device wirelessly without using the remote wireless device, and it is possible to contribute to cost reduction.

In the above wireless system, the sensor device may detect the state of the actuator (72). Since wiring between the sensor device for detecting the state of the actuator and the remote wireless device is not required, the risk of failure due to disconnection can be significantly reduced.

In the above wireless system, the actuator may be provided in the production equipment (70). In accordance with such a configuration, it is possible to contribute to improvement in productivity.

In the above wireless system, the plurality of sensor devices may be provided for the single actuator.

In the above wireless system, the single remote wireless device may receive the signal transmitted from each of the plurality of sensor devices wirelessly.

In the above wireless system, the single base wireless device may perform the wireless communication with the plurality of the remote wireless devices.

In the above wireless system, the protocol of the wireless communication performed between the base wireless device and the remote wireless device may be different from the protocol of the wireless communication performed between the remote wireless device and the sensor device.

In the above wireless system, the frequency band used in the wireless communication performed between the base wireless device and the remote wireless device may be different from the frequency band used in the wireless communication performed between the remote wireless device and the sensor device.

The wireless device (10) includes the computer (12), the first base wireless device (14A) connected to the computer by the fieldbus (21), the first remote wireless device (16) configured to perform the wireless communication with the first base wireless device, the first sensor device (18A) configured to transmit the signal to the first remote wireless device, the second base wireless device (14B) connected to the computer by the fieldbus, the second sensor device (18B) configured to transmit the signal to the second base wireless device wirelessly, the wireless power supply device (20C) configured to perform the wireless power supply to at least the first sensor device, and the other wireless power supply device (20D) configured to perform the wireless power supply to the second sensor device. In accordance with such a configuration, the signal transmitted from the second sensor device can be received by the second base wireless device wirelessly without using the remote wireless device, and therefore, it is possible to contribute to cost reduction of the wireless system.

### REFERENCE SIGNS LIST

10: wireless system
12: computer
14, 14A, 14B: base wireless device
16: remote wireless device
18, 18A, 18B: sensor devices
20, 20A to 20D: wireless power supply device
21: fieldbus
22, 22A, 22B: network
24, 32, 44, 56: computation unit
26, 34, 46, 58: storage unit
28, 40: input/output interface
30, 36, 48, 62: control unit
38, 50, 64: transmission/reception processing unit
42, 52A, 52B, 66: communication unit
54, 68: wireless power receiving unit
60: sensor element
70: production equipment
72: actuator
74, 74A, 74B: antenna

## Claims

1. A wireless system (10) comprising:
a base wireless device (14);
a remote wireless device (16) configured to perform wireless communication with the base wireless device;
a sensor device (18) configured to transmit a signal to the remote wireless device wirelessly;
a wireless power supply device (20) configured to perform wireless power supply to at least the sensor device.

2. The wireless system according to claim 1, wherein wireless power supply to the remote wireless device is performed by the wireless power supply device.

3. The wireless system according to claim 1, further comprising another wireless power supply device (20B) configured to perform wireless power supply to the remote wireless device.

4. The wireless system according to claim 3, wherein a frequency of an electromagnetic wave used in the wireless power supply performed by the wireless power supply device is same as a frequency of an electromagnetic wave used in the wireless power supply performed by the other wireless power supply device.

5. The wireless system according to claim 3, wherein a frequency of an electromagnetic wave used in the wireless power supply performed by the wireless power supply device is different from a frequency of an electromagnetic wave used in the wireless power supply performed by the other wireless power supply device.

6. The wireless system according to claim 1, wherein the wireless power supply device performs the wireless power supply using a plurality of antennas (74).

7. The wireless system according to claim 1,
wherein a plurality of the base wireless devices are provided,
the wireless system further comprises a computer (12) connected to the plurality of base wireless devices by a fieldbus (21),
at least one base wireless device (14B) among the plurality of base wireless devices receives a signal transmitted from another sensor device (18B) wirelessly without using the remote wireless device, and
wireless power supply to the other sensor device is performed by another wireless power supply device (20D).

8. The wireless system according to any one of claims 1 to 7, wherein the sensor device detects a state of an actuator (72).

9. The wireless system according to claim 8, wherein the actuator is provided in production equipment (70).

10. The wireless system according to claim 9, wherein a plurality of the sensor devices are provided for the single actuator.

11. The wireless system according to any one of claims 1 to 10, wherein the single remote wireless device receives a signal transmitted from each of a plurality of the sensor devices wirelessly.

12. The wireless system according to any one of claims 1 to 11, wherein the single base wireless device performs wireless communication with a plurality of the remote wireless devices.

13. The wireless system according to any one of claims 1 to 12, wherein a protocol of the wireless communication performed between the base wireless device and the remote wireless device is different from a protocol of wireless communication performed between the remote wireless device and the sensor device.

14. The wireless system according to any one of claims 1 to 13, wherein a frequency band used in the wireless communication performed between the base wireless device and the remote wireless device is different from a frequency band used in wireless communication performed between the remote wireless device and the sensor device.

15. A wireless system (10) comprising:
a computer (12);
a first base wireless device (14A) connected to the computer by a fieldbus (21);
a first remote wireless device (16) configured to perform wireless communication with the first base wireless device;
a first sensor device (18A) configured to transmit a signal to the first remote wireless device;
a second base wireless device (14B) connected to the computer by the fieldbus;
a second sensor device (18B) configured to transmit a signal to the second base wireless device wirelessly;
a wireless power supply device (20C) configured to perform wireless power supply to at least the first sensor device; and
another wireless power supply device (20D) configured to perform wireless power supply to the second sensor device.
